# EUROPÄISCHE PATENTANMELDUNG

(11) **EP 0 677 238 A1**
(43) Veröffentlichungstag der Anmeldung: **18.10.1995**
(21) Anmeldenummer: 95104942.8
(22) Anmeldetag: 03.04.1995
(51) Int. Cl.: A01C 5/06

(54) **Andrückrad für eine Sämaschine**

(30) Priorität: 13.04.1994 US 227411
(71) Anmelder: DEERE & COMPANY, Moline, Illinois 61265 (US)
(72) Erfinder: Yoder, Alfred Dean, Geneseo, Illinois 61254 (US); Ott, David Fredrick, Sherrard, Illinois 61281 (US)
(74) Vertreter: Feldmann, Bernhard

(57) **Zusammenfassung**

Ein Andrückrad (40) für eine Sämaschine, das rückwärtig einer Furchenöffnereinrichtung in einer Saatfurche umläuft, ist mit einem sich an die Lauffläche (52) anschließenden Ringabschnitt (54) von konstanter Breite versehen, der in einen sich in Richtung zur Radmitte hin konisch erweiternden Abschnitt mit nach außen schräg verlaufenden Seitenteilen (56) übergeht.

## Beschreibung

Die Erfindung bezieht sich auf ein Andrückrad für eine Sämaschine, das rückwärtig einer Furchenöffnereinrichtung in einer Saatfurche umläuft.

Derartige Andrückräder oder -rollen werden insbesondere bei Einzelkornsämaschinen eingesetzt und dienen zum Andrücken des Saatgutes in das Erdreich, bevor es wieder mit Erde bedeckt wird. Hierdurch wird eine bessere Keimung erreicht, da Hohlräume um das einzelne Saatgut herum vermieden werden. Das bekannte Andrückrad (US-A-4 307 674), von dem die Erfindung ausgeht, ist mit zueinander parallel verlaufenden oder ebenen Seitenflächen versehen. Solche Andrückräder neigen aber dazu, aus der Saatfurche heraus zu laufen.

Bekannt sind auch Pressräder, die das Erdreich verfestigen, nachdem die Saat mit Erdreich zugedeckt wurde. Zustreichräder haben die Aufgabe, eine Furche zu schließen und das Erdreich zu verfestigen.

Mit der vorliegenden Erfindung wird ein Andrückrad geschaffen, dessen Seitenwände zumindest weitgehend den inneren Furchenwänden entsprechen. Hierzu sieht die Erfindung ein Andrückrad mit einem sich an die Lauffläche anschließenden Ringabschnitt von konstanter Breite vor, der in einen sich in Richtung zur Radmitte hin konisch erweiternden Abschnitt mit nach außen schräg verlaufenden Seitenteilen übergeht. Infolge der schräg verlaufenden Seitenteile können diese Andrückräder der Saatfurche besser folgen, wobei der Ringabschnitt von konstanter Breite zu einem besseren Saat-zu-Boden Kontakt beiträgt, da er die Furchenseitenwände direkt oberhalb des Saatgutes einstürzen läßt.

Bei derartigen Andrückrädern können die Laufflächen eben oder konkav ausgebildet sein.

In der Zeichnung ist ein Ausführungsbeispiel der Erfindung dargestellt. Es zeigt:
- Fig. 1: eine Reiheneinheit einer Einzelkorn-Sämaschine in Seitenansicht, die mit einem Andrückrad versehen ist,
- Fig. 2: ein einzelnes Andrückrad, teilweise im Querschnitt und
- Fig. 3: ein Andrückrad mit einer konkaven Lauffläche.

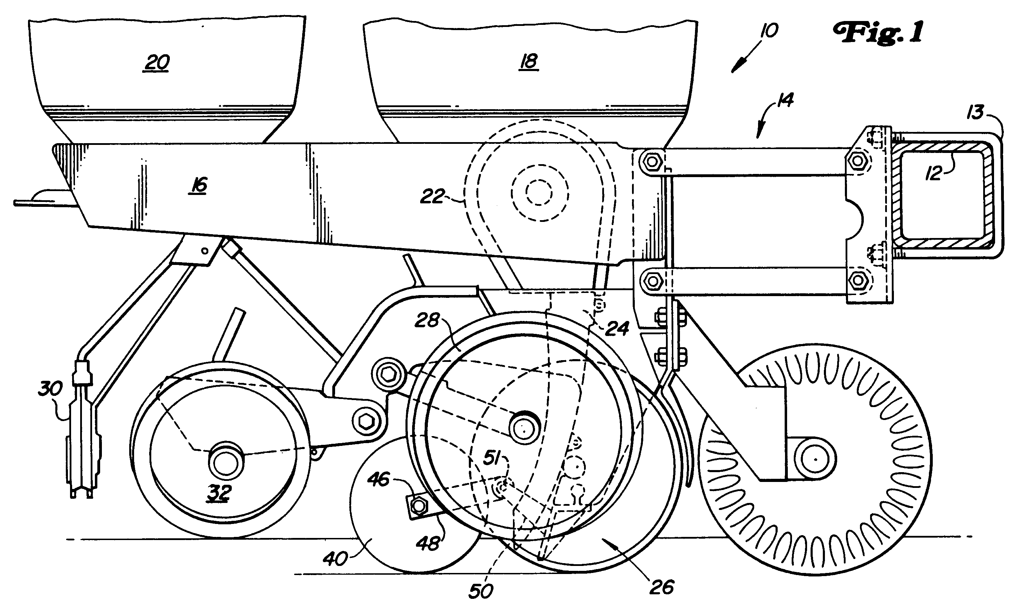

In Fig. 1 der Zeichnung ist eine Reiheneinheit 10 einer Einzelkorn-Sämaschine zu erkennen. Diese ist in üblicher Weise an einem quer zur Arbeitsrichtung verlaufenden Werkzeugträger 12 über U-förmige Bügelschrauben 13 angeschlossen, wobei noch ein Parallelogrammgestänge 14 zwischen dem Werkzeugträger 12 und dem Rahmen 16 einer jeden Reiheneinheit 10 vorgesehen ist. Auf jedem Rahmen 16 ist ein Saatgutbehälter 18 und ein Behälter 20 für Chemikalien vorgesehen. Saatgut aus dem Saatgutbehälter 18 gelangt in eine Austragvorrichtung 22, die einzelnes Saatgut erfaßt und in ein Saatrohr 24 abgibt. Durch dieses wird jedes einzelne Saatkorn in kontrollierter Weise in gleichmäßigem Abstand und in gleichmäßiger Tiefe in eine Saatrille abgelegt, die zuvor durch einen Furchenöffner 26 gezogen wurde. Steuerräder 28 bestimmen dabei die Furchentiefe. Chemikalien, vorzugsweise in granulierter Form, gelangen über eine nicht dargestellte Dosiervorrichtung und einen Ausbringer 30 in das Erdreich an der Furche, beispielweise, wenn diese bereits wieder geschlossen wurde. Zum Schließen der Furche oder Saatrille sind Zustreichräder 32 vorgesehen, die am Rahmen drehbar gelagert sind und in bekannter Weise die Furche schließen, indem sie Erdreich in die Furche drücken.

Rückwärtig der Steuerräder 28 und mit Bezug auf die Arbeitsrichtung vor den Zustreichrädern 32 ist an jeder Rahmeneinheit 10 eine in der Saatrille oder Furche laufende Andrückrolle 40 bzw. ein Andrückrad vorgesehen. Diese dient zum Andrücken des in die Furche abgelegten Saatgutes in den Boden. Derartige Andrückrollen sind bei bestimmten Bodenverhältnissen, die durch Bodenfeuchte, Wetterbedingungen, Bodenart etc. bestimmt sind, von besonderer Bedeutung, wobei auch die Aussaat, beispielsweise Winterweizen, und die Größe des einzelnen Saatkorns eine Rolle spielen. Die vorliegende Erfindung befaßt sich mit der besonderen Ausbildung einer solchen Andrückrolle, deren Einsatz nicht auf Einzel-Kornsämaschinen begrenzt ist.

Bei dem bevorzugten Ausführungsbeispiel ist die Andrückrolle 40 als umlaufende Ringscheibe 42 ausgebildet und mit einer mittigen Öffnung 44 zur Aufnahme von Lagern für eine Abrollbewegung versehen. Damit kann die Ringscheibe 42 drehbar an einer Achse 46 an einem Schwenkarm 48 angeordnet werden. Der Schwenkarm selbst ist an einem Ausleger 50 über eine Schwenkstelle 51 angeschlossen. Der Ausleger 50 ist mit dem Rahmen 16 mittel- oder unmittelbar verbunden.

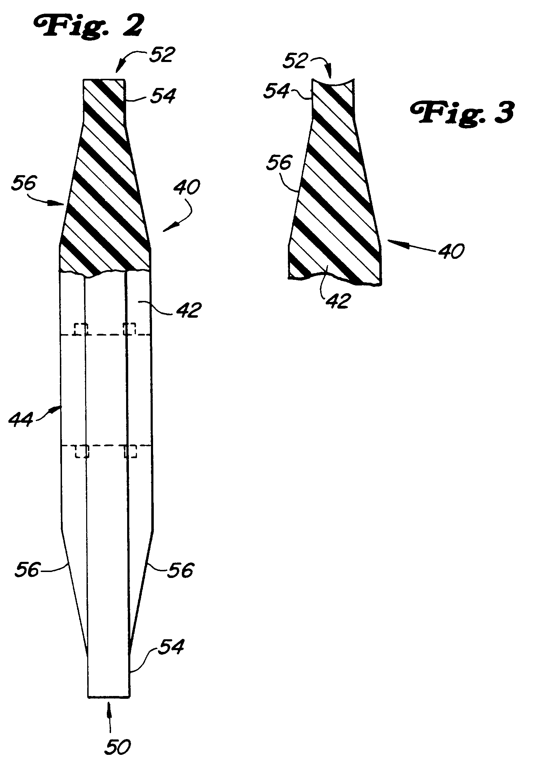

Die Form der Andrückrolle 40 ist den Fig. 2 oder 3 zu entnehmen. Man erkennt eine äußere Lauffläche 52, die jedes Saatgut kontaktiert und eben ausgebildet sein kann, wie es aus Fig. 2 hervorgeht, oder konkav, wie es Fig. 3 zeigt. Unmittelbar an die Lauffläche schließt sich ein äußerer Ringabschnitt 54 von gleichmäßiger Stärke an. Dieser geht in einen konischen Abschnitt über, der durch nach außen schräg verlaufende Seitenwände 56 bestimmt wird. Die Andrückrolle ist damit beidseitig umgekehrt tellerförmig mit einem gerade verlaufenden äußeren Rand ausgebildet.

## Patentansprüche

1. Andrückrad für eine Sämaschine, das rückwärtig einer Furchenöffnereinrichtung in einer Saatfurche umläuft, gekennzeichnet durch einen sich an die Lauffläche (52) anschließenden Ringabschnitt (54) von konstanter Breite, der in einen sich in Richtung zur Radmitte hin konisch erweiternden Abschnitt mit nach außen schräg verlaufenden Seitenteilen (56) übergeht.

2. Andrückrad nach Anspruch 1, dadurch gekennzeichnet, daß die Lauffläche (52) eben oder konkav ausgebildet ist.
